# EUROPEAN PATENT APPLICATION

(11) **EP 2 072 285 A1**
(43) Date of publication of application: **24.06.2009**
(21) Application number: 08170911.5
(22) Date of filing: 08.12.2008
(51) Int. Cl.: B60C 11/02

(54) **Tire thread composite and retreaded rubber tire**

(30) Priority: 20.12.2007 US 961292
(71) Applicant: The Goodyear Tire & Rubber Company, Akron, OH 44316-0001 (US)
(72) Inventor: Herberger, Sr., James Robert, Canal Fulton, OH 44614 (US); Majumdar, Ramendra Nath, Hudson, OH 44236 (US)
(74) Representative: Kutsch, Bernd

(57) **Abstract**

The invention relates to a retreaded tire comprising a lamina (11) of a circumferential outer cured tread rubber layer (2) having an unbuffed surface thereon adhered to a circumferential rubber layer (10) overlaying a rubber tire carcass (8) without an adhesive coating between said rubber layer (10) and said cured tread rubber layer (2).

## Description

### Field of the Invention

This invention relates to a cured tire tread composite and to the retreading of a tire. The cured tire tread composite comprises a cured tire tread having a removable protective film molded onto one of its surfaces.

### Background of the Invention

Retreaded tires are typically prepared, for example, by applying a pre-cured rubber tread to a circumferential uncured rubber layer, sometimes referred to as a "cushion layer", which overlays a buffed tire rubber carcass from which the original rubber tread has been removed by abrading it away, to form an assembly thereof and the assembly cured at an elevated temperature to form a cured retreaded rubber tire.

The pre-cured rubber tread may be of a cap/base construction comprising an outer tread cap rubber layer and an underlying tread base rubber layer or may be composed only a tread cap rubber layer, without the underlying tread base rubber layer.

In practice, the pre-cured rubber tread is typically prepared, for example, by coating an uncured rubber tread strip with a release agent such as, for example, an organopolysiloxane based coating, to prevent the rubber tread from sticking to the mold surface used for molding and curing the tread rubber strip. In practice the release agent coated rubber strip is placed in a suitable mold and cured at an elevated temperature to form a pre-cured rubber tread which still contains the release agent coating on its surfaces.

A challenge is to adhere the release agent coated pre-cured rubber tread to the uncured cushion rubber layer on the buffed tire cured rubber carcass, particularly since the release agent coating significantly interferes with such application.

In typical past practice, the release agent coating is removed from the pre-cured tread surface by buffing it off to thereby leave a clean, rough buffed surface on the pre-cured tread. An organic solvent based cement may be applied to the buffed surface of the pre-cured rubber tread to generate building tack and eventual cured adhesion to the buffed cured rubber carcass. A protective plastic film is typically applied to the buffed and cement coated surface of the cured rubber tread to prevent contamination of the tacky surface of the cement coating and, in combination with the cement coating, prevent surface contamination and atmospheric oxidation. The resulting pre-cured tread composite of buffed cured rubber tread and cement coating, together with the protective film, can then be stored for a period of time and either immediately used or used at a later date for the retreading of tires after removal of the protective film.

In further typical past practice, for the retreading of tires, a cured rubber tire is buffed to remove its tread, thereby leaving a rough buffed tire carcass surface, i.e. the rubber tire carcass without its tread. To the rough buffed tire carcass cured rubber surface is applied an uncured rubber layer (sometimes referred to as a cushion rubber layer) which will become an interface between the tread and carcass.

In such past practice, the aforesaid pre-cured tread composite, after removal of the protective film, is applied to said uncured cushion rubber layer on the buffed cured tire carcass to form a tire assembly composed of the pre-cured tread composite, i.e. a cured tread with adhesive coating, and cured rubber tire carcass with the uncured cushion rubber layer therebetween.

In such past practice, the tire assembly is then cured at an elevated temperature to form the retreaded tire composed of a lamina comprising a circumferential rubber tread with its adhesive coating and tire carcass with a rubber cushion layer therebetween.

In significant contrast, for this invention, the uncured rubber tread strip is molded and cured in a suitable mold together with a suitable removable polymeric film which becomes molded onto a surface of the tread rubber during its molding and curing operation, instead of post-applying a combination of adhesive coating and a protective plastic film on an already cured rubber tread. Accordingly, surface contamination and atmospheric oxidation of the cured tread can be prevented during storage of the pre-cured rubber tread without such aforesaid application of adhesive coating and protective plastic film.

In particular, by practice of this invention, upon removal of the molded film from the surface of the pre-cured rubber tread, a clean, i.e. a release agent-free, surface of the pre-cured tread can be provided without having to buff away a release agent coating and which therefore does not contain the release agent coating to interfere with application to the uncured cushion rubber layer.

In one embodiment of the invention, an uncured cushion rubber layer is used which has a surface with suitable building tack for which a need of applying the aforesaid tack enhancing cement to the cured rubber tread can be eliminated. Cushion rubber layers with building tack that can be used as adhesive rubber layer are described in US-A- 5,503,940 and US-A- 6,186,202 and US-A- 2005/0211351.

Therefore, by the practice of this invention a clean, unbuffed surface of a cured rubber tread can be prepared and applied to an uncured rubber cushion layer which is at least largely free from surface contamination and atmospheric degradation as well as free from release agent coating.

Accordingly, for this invention, prior to curing the uncured rubber tread strip, a removable polymeric film is applied to the one of its uncured surfaces to form a tread/film composite, a release agent is applied to surfaces of the composite to protect against the tread rubber sticking to a mold surface, following which the rubber tread strip is shaped and cured in a suitable mold at an elevated temperature while simultaneously molding the polymeric film to the tread rubber surface to protect the ultimately cured rubber tread surface from contamination by the aforesaid release agent. The polymeric film is then removed from the cured rubber tread to yield a clean rubber surface without having to buff the cured rubber tread surface to remove the release agent.

Where an uncured rubber cushion layer is applied to the buffed tire carcass having building tack, application of an adhesive coating to the cured tread surface is not normally needed for the practice of this invention.

Accordingly, for this invention, a retreaded tire comprises lamina of a circumferential outer tread rubber layer having a running surface on one side and a clean, unbuffed surface on its opposing side, wherein its clean unbuffed surface is adhered to a circumferential cushion rubber layer overlaying a rubber tire carcass, without an adhesive coating between said cushion rubber layer and said clean unbuffed tread rubber layer surface. Such retreaded tire is prepared by application of a clean, unbuffed surface of a pre-cured rubber tire tread to a circumferential uncured cushion rubber layer without an adhesive or tacky coating therebetween which overlays a cured rubber carcass to form an assembly thereof and the assembly cured in a suitable mold at an elevated temperature to form a cured retreaded rubber tire. The pre-cured rubber tire tread itself is provided by molding and curing an uncured rubber tread strip with a polymeric film on one of its surfaces to protect it from surface contamination and blooming followed by removing said film to provide a clean, unbuffed surface on said pre-cured rubber tread prior to applying said pre-cured tread to the circumferential uncured adhesive rubber layer.

In practice, a significant problem envisioned in simply applying a protective polymeric film for such purpose to the surface of the uncured rubber tread strip is that a typical thermoplastic film, such as for example a polyethylene film, is viewed herein as being unsatisfactory in a sense that such thermoplastic film does not have sufficient dimensional stability and resistance to tear for removal from the surface of the tread rubber strip after it is removed from the mold and, further, that it typically has a melting point (ASTM D98) significantly 150°C and would therefore normally melt at typical rubber cure temperatures such as for example 150°C or, for example, in a range of from 145°C to 180°C.

Therefore, a suitable film for such purpose is viewed herein as being significantly dimensionally stable so that it can be removed from the surface of the pre-cured rubber tread surface after the uncured tread strip to which it has been applied has been molded and cured in a suitable mold at an elevated temperature, e.g. at least 145°C or, preferably, in a range of, for example, from 145°C to 180°C).

In a further embodiment, it is desired that the protective film is manually removable from the resulting pre-cured rubber tread and not readily fused to itself when its layer is overlapped over itself. In this manner then, one end of the film may overlap a portion of the film to form a "pull-tab" for manually removing the molded film from the pre-cured rubber tread.

In practice, it has been found that a film comprising nylon 6,6 or nylon 6 may be used in the sense of applying it to a surface of said uncured tread rubber strip.

### Summary and Practice of the Invention

The invention relates to a retreaded fire according to claim 1, a process according to claims 6 or 13 and to a pre-cured rubber tread or composite according to claims 11 or 12.

Dependent claims refer to preferred embodiments of the invention.

In one embodiment a retreaded tire comprises a lamina of a circumferential outer tread cured rubber layer having a clean, unbuffed surface thereon adhered to a circumferential adhesive rubber layer overlaying a rubber tire carcass without an adhesive coating between said adhesive rubber layer and said clean, unbuffed tread rubber layer surface.

Said outer tread cured rubber layer may be of a cap/base construction comprising an outer tread cap rubber layer and an underlying tread base rubber layer or may be composed of a tread cap rubber layer (without an underlying tread base rubber layer).

In one further aspect of this invention, a pre-cured tread for a retreaded tire is prepared by a process which comprises;
(A) applying a protective removable polymeric film to an uncured rubber tread strip to form a composite thereof, wherein said polymeric film has a melt point, ASTM D789, significantly higher than the cure temperature for said tread rubber strip (desirably a melt point of at least 190°C);
(B) applying a mold release agent (e.g. a polysiloxane based release agent) to the surfaces of said uncured tread rubber strip composite including at least a portion of the surface of said protective polymeric film on said rubber strip;
(C) inserting the release agent coated uncured tread rubber strip composite in a suitable mold and molding and curing the tread rubber strip therein at an elevated cure temperature of at least 145°C (e.g. in a range of from 145°C to 180°C) to form a pre-cured rubber tread composite comprising the cured rubber tread and said protective polymeric film molded (but not melted) thereon.

Said pre-cured rubber tread may be of a cap/base construction comprising an outer tread cap rubber layer and an underlying tread base rubber layer or may be composed of a tread cap rubber layer (without an underlying tread base rubber layer).

In practice, said polymeric film is not melted onto the tread rubber surface during said molding and curing of the tread rubber strip because said polymeric film has a melt point significantly higher than the cure temperature for the tread rubber strip and is therefore removable from the cured rubber tread.

In a further aspect of this invention, said protective polymeric film is removed from the surface of said pre-cured rubber tread to yield a pre-cured rubber tread having a clean unbuffed rubber surface free from said mold release agent coating.

In a further aspect of this invention, a pre-cured rubber tread is provided having a clean, unbuffed surface free of mold release agent coating, particularly being prepared by said method.

As hereinbefore mentioned, said pre-cured rubber tread may be of a cap/base construction comprised of an outer tread cap rubber layer and an underlying tread base rubber layer or may be a tread cap rubber layer (said uncured rubber tread strip comprised of a co-extruded uncured tread rubber cap layer and uncured tread rubber base layer) and wherein said protective polymeric film is applied to the surface of said tread base rubber layer (of said co-extruded cap/base tread rubber strip construction)

In yet a further aspect of this invention, a process of preparing a retreaded tire comprises:
(A) applying a clean, unbuffed surface of a pre-cured rubber tire tread layer to a circumferential uncured adhesive rubber layer, without an adhesive coating therebetween, wherein said circumferential uncured adhesive rubber layer overlays a cured rubber tire carcass to form an assembly thereof, and
(B) curing said assembly an elevated temperature to form a cured retreaded rubber tire;
wherein said pre-cured rubber tire tread layer is prepared by:
(1) applying a polymeric film to one surface of an uncured rubber tread strip to form a composite thereof;
(2) applying a release agent coating to the surfaces of said composite, including at least a portion of said polymeric film;
(3) curing said uncured tread rubber strip containing said polymeric film thereon at an elevated cure temperature of at least 145°C (e.g. in a range of from 145°C to 180°C) to form a pre-cured rubber tread having said polymeric film molded thereon;
(4) removing said polymeric film from said pre-cured rubber tread to provide a clean, unbuffed surface on said pre-cured rubber tread prior to applying said pre-cured tread to the circumferential uncured cushion rubber layer.

In practice, said polymeric film may be, for example, a nylon film or a thermoplastic fluorinated polyethylene film.

Representative of nylon based polymeric films are:
(A) films of linear polycondensates of lactams having from 6 to 12 carbon atoms (e.g. caprolactam) such as, for example, nylon 6 as a poly((imino(1-oxohexamethylene)) (polyamide) typically having a melting point in a range in a range of from 200°C to 220°C (ASTM D789), from the Honeywell Company, and
(B) films of a polycondensate of a diamine and dicarabocylic acid such as, for example, nylon 6,6 as a poly(iminohexamethyleneiminoadipoyl) (polyamide) typically having a melting point in a range of from 250°C to 260°C (ASTM D789), a product of the DuPont company.

Representative of thermoplastic fluorinated polyethylene films are, for example, film available as FEP^{™} films from DuPont which can include DuPont polytetrafluoroethylene (Teflon^{™}) films.

In one embodiment, said circumferential cushion rubber layer composition comprises for example, a layer of an elastomeric rubber composition comprising at least one conjugated diene-based elastomer, for example, cis 1,4-polyisoprene rubber (usually natural rubber) and, optionally cis 1,4-polybutadiene rubber, which contains a bis-imide compound and tackifier resin (see US-A- 5,503,940). For example, said bis-imide compound comprises an N,N'm-xylene biscitraconic imide as Perkalink 900™, N,N'-m-phenylene bismaleimide, 1,1'(methylenedi-4,1-phenylene) bis maleimide, or combinations thereof (preferably comprising said N,N'm-xylene biscitraconic imide), the tackifier as a phenol-formaldehyde tackifier resin.

A significant aspect of the invention is considered herein as both providing an improved process of preparation of a pre-cured rubber tread, and the resultant pre-cured rubber tread in the sense of elimination of buffing and cementing requirements in the production of a pre-cured rubber tread product for retreading a rubber and a thereby improved pre-cured rubber tread having a clean, unbuffed surface without a cement coating.

A further significant aspect of the invention is considered herein as both providing an improved tire retreading process and a resultant retread tire.

This is considered herein as being significant in a sense of providing a more efficient process of both preparing a pre-cured rubber tread and preparing a retreaded tire as well as providing a pre-cured rubber tread and retreaded tire which includes a rubber tread with a clean, unbuffed surface and without a cement coating.

### Brief Description of the Drawings

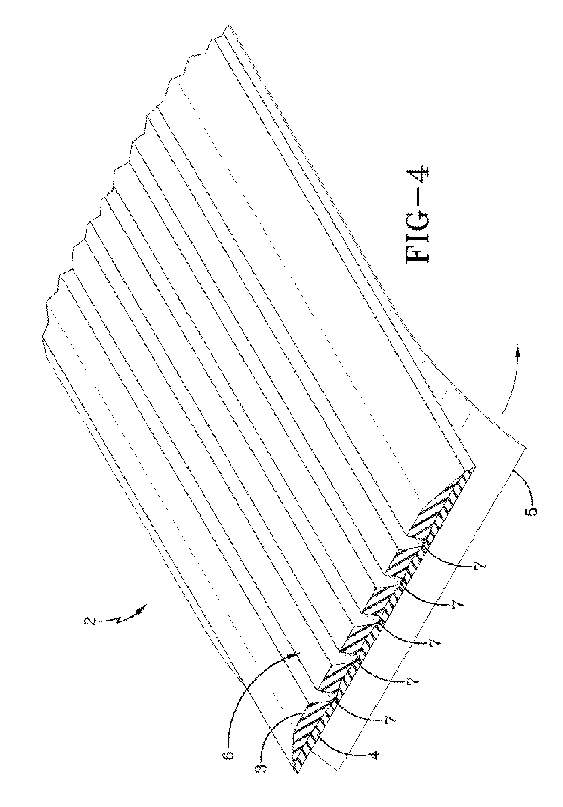

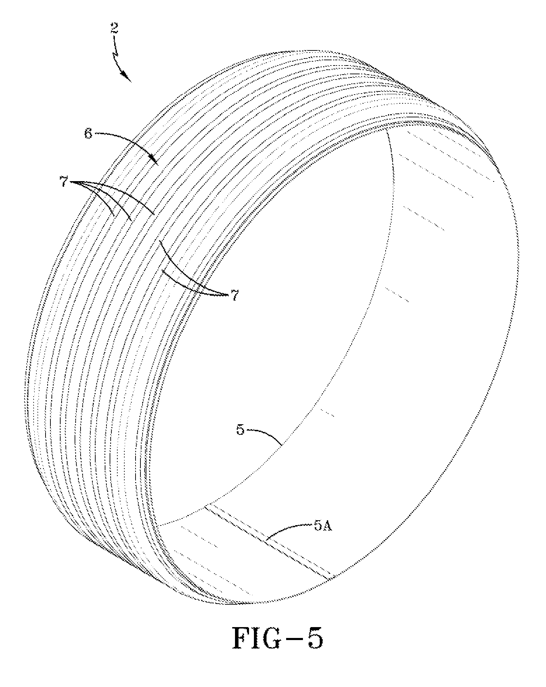

Drawings are provided herewith for a further understanding of the invention.
In the Drawings, Figures 1 through 8 are provided (FIGS 1 through 8) as cross sections of a tread and of a tire carcass, respectively, to illustrate a tire tread and associated tire in a retreading operation.

### In the Drawings

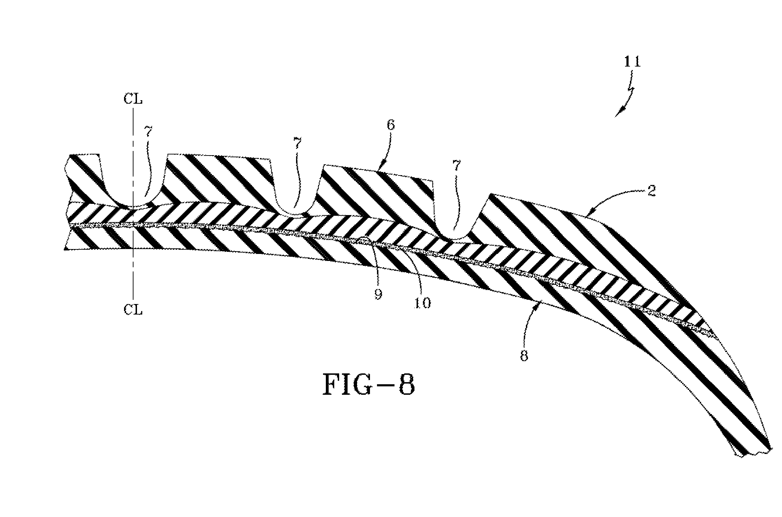

In FIG 1 a cross section of an extruded, shaped, uncured tread rubber strip 1 is depicted comprised of a tread cap layer 3.
In FIG 1A the uncured tread cap layer 3 of FIG 1 is depicted having a protective polymeric film of nylon 6 (melt point in a range of from 200°C to 220°C, ASTM D789) or nylon 6,6 (melt point in a range of from 250°C to 260°C, ASTM D789) applied to the bottom surface to form an uncured tread rubber strip composite.
In FIG 2 a cross section of an extruded, shaped, uncured tread rubber strip 1 of a cap/base construction is depicted which is composed of an outer tread cap rubber layer 3 and an underlying tread base rubber layer 4.
In FIG 2A, the uncured tread rubber tread strip of FIG 2 is depicted having a protective polymeric film 5 of nylon 6, nylon 6,6 or fluorinated polyethylene (e.g. polytetraflouroethylene) applied to the surface of its tread rubber base layer 4 to form an uncured tread rubber strip composite thereof.
FIG 3 depicts the tread rubber strip composite of FIG 1A having been shaped and cured in a suitable mold at a temperature of 180°C to form a shaped pre-cured rubber tread 2 with said protective polymeric film 5 molded to the bottom surface of the tread cap layer 3, and with its outer running surface 6 comprising lugs and intervening grooves 7, after prior application of a release agent coating (e.g. an organopolysiloxane) to its surfaces, including at least a portion of the surface of the aforesaid protective polymeric film 5.
FIG 3A depicts the tread rubber strip of FIG 2A having been shaped and cured in a suitable mold to form a shaped pre-cured rubber tread 2 in the manner described for FIG 3 with a base rubber layer 4 underlying the tread cap rubber layer and having a said protective polymeric film 5 on the surface of its tread rubber base layer 4.
FIG 4 depicts a view of a portion of a pre-cured tread 2 of FIG 3A showing the aforesaid tread cross section with the protective film 5 in a process of being removed from the bottom of the pre-cured tread base layer 4 to present a clean rubber surface of the pre-cured rubber tread 2 free from the release agent coating. While FIG 4 depicts the tread outer surface being composed of ribs and intervening grooves, it is understood that such tread may be composed of lugs and grooves.
FIG 5 depicts a pre-cured rubber tread 2 in continuous annular shape with the protective film 5 on the bottom surface of the tread base layer in an overlapping configuration 5A so as to present a "pull tab" for assistance in removing the film 5.
FIG 6 depicts a buffed cured rubber tire carcass 8 having the tire tread removed (e.g. by buffing it away) leaving a rough exposed surface 9.
FIG 7 depicts the buffed tire carcass 8 of FIG 6 having an uncured rubber layer, namely a cushion rubber layer, 10, having a surface building tack applied to the buffed surface 9 of the cured tire carcass 8.
   The pre-cured rubber tread 2 is applied to the uncured cushion rubber layer 10 cut to length and its ends spliced together over and stitched down onto the carcass to complete the retreaded tire assembly, which contains the uncured rubber cushion rubber layer. The process is understood in such art as building a retread tire. The assembly is placed in an envelope and the enveloped assembly placed in a heated chamber (autoclave). The elevated temperature of the chamber and pressure exerted by the envelope results in the curing of the cushion rubber layer. After a sufficient time to cure the cushion rubber layer, the enveloped assembly is removed from the chamber and the retreaded tire is removed from the envelope to result in the retreaded tire as depicted in FIG 8.

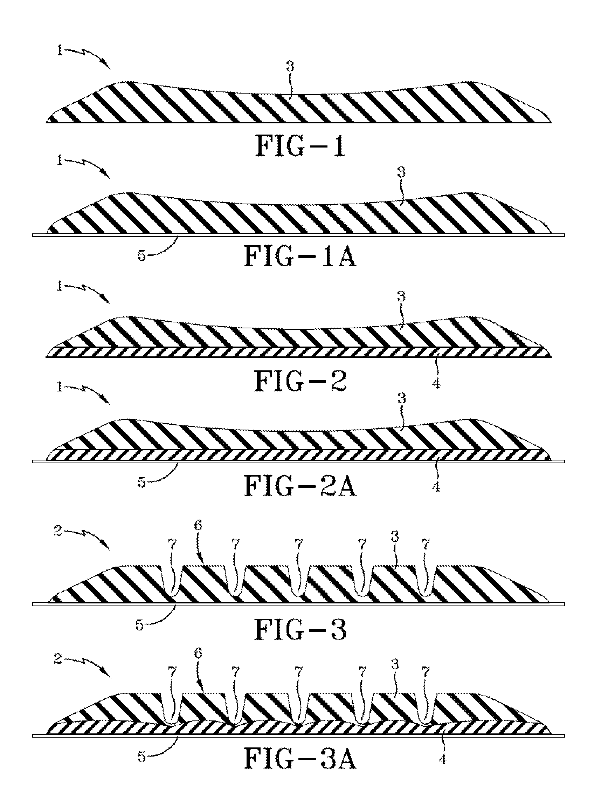

FIG 8 depicts a retreaded tire lamina 11 prepared by the aforesaid method comprising the tread 2, (illustrated in FIG 3), having lugs with a running surface 6, grooves therebetween 7, cushion rubber layer 10 without a cement layer between said cushion rubber layer and said tread 2 and supporting tire carcass 8.
   The following example is provided to further illustrate the invention. The parts and percentages are by weight unless otherwise indicated.

### EXAMPLE I

A retreaded pneumatic rubber tire of size 295/75R22.5 is prepared according to the practice of this invention.

For the preparation of such retreaded tire, an extruded shaped uncured natural rubber based tread strip of a co-extruded cap/base construction is provided similar to the tread strip of FIG 2.

A protective polymeric nylon 6 film is applied to surface of the base rubber layer of uncured tread strip cap in the manner of FIG 2A to form a composite thereof.

A polysiloxane based release agent coating is applied to the surfaces of the uncured tread strip, including at least a portion of the nylon 6 protective polymeric film.

The composite of the uncured rubber tread strip and protective nylon 6 polymeric film which contains the release agent coating on its surfaces is molded and shaped in a suitable mold at an elevated temperature of 180°C to form the shaped pre-cured rubber tread of FIG 3A with the nylon 6 polymeric film molded (without melting) to the bottom surface of the pre-cured rubber tread.

The nylon 6 polymeric film is manually removed from the bottom of the pre-cured tread with a force of about 21 Newtons/inch (8.3 Newtons/cm) to leave a clean, unbuffed surface on the bottom of the pre-cured tread.

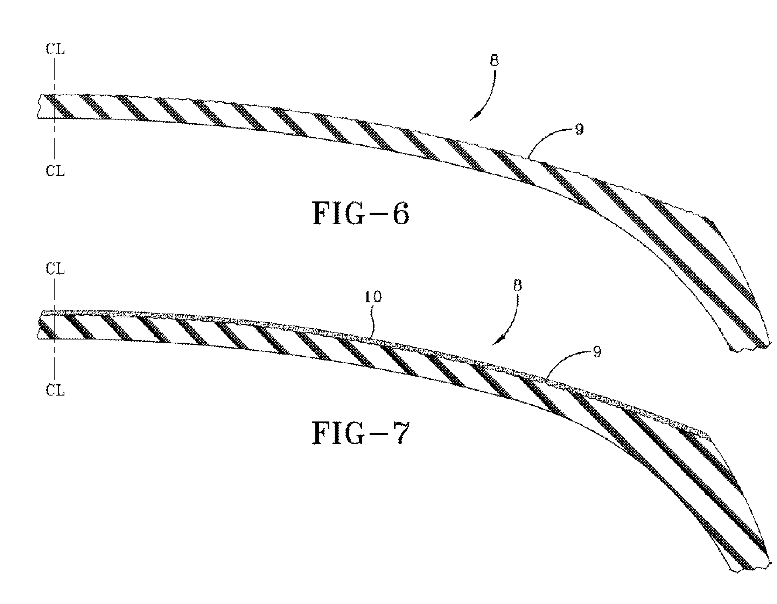

A cured rubber tire casing (tire carcass) is obtained having its tread buffed away to leave a rough surface on the tire carcass as depicted in FIG 6.

An uncured cushion rubber layer is applied to the buffed surface of the tire carcass as depicted in FIG 7 to form a tire assembly thereof. The cushion rubber layer is a rubber composition based upon a blend comprised of natural rubber and cis 1,4-polybutadiene rubber containing a bis-imide compound comprised of N,N'm-xylene biscitraconic imide as Perkalink 900^{™} and phenol-formaldehyde tackifying resin.

The surface of the uncured cushion rubber layer has suitable building tack so that an adhesive coating is not needed between said uncured cushion rubber layer and said pre-cured rubber tread. The tire assembly is cured at an elevated temperature of 150°C to form a retreaded tire.

## Claims

1. A retreaded tire comprising a lamina (11) of a circumferential outer cured tread rubber layer (2) having an unbuffed surface thereon adhered to a circumferential rubber layer (10) overlaying a rubber tire carcass (8) without an adhesive coating between said rubber layer (10) and said cured tread rubber layer (2).

2. The retreaded tire of claim 1 wherein said outer cured tread rubber layer (2) is of a cap/base construction comprising an outer tread cap rubber layer (3) and an underlying tread base rubber layer (4).

3. The retreaded tire of claim 1 wherein said outer cured tread rubber layer (2) is a tread cap rubber layer (3) without an underlying tread base rubber layer (4).

4. The retreaded tire of one of the previous claims wherein the surface of the outer cured tread rubber layer (2) adhered to the rubber layer (10) is a clean surface, or a surface that is free from a release agent and preferably also free or at least largely free from surface contamination and atmospheric degradation or oxidation.

5. The retreaded tire of one of the previous claims wherein the circumferential rubber layer (10) is an adhesive or tacky circumferential rubber cushion layer (10).

6. A process of preparing a pre-cured rubber tread, the process comprising:
(A) applying a protective removable polymeric film (5) to an uncured tread rubber strip (1) to form a composite thereof, wherein said polymeric film (5) has a melting temperature higher than the cure temperature for said uncured tread rubber strip (1);
(B) applying a mold release agent to the surfaces of said composite including at least a portion of the surface of said polymeric film (5) on said uncured tread rubber strip (1);
(C) inserting the at least partially mold release agent coated composite in a suitable mold and molding and curing the composite therein at a cure temperature of at least 145°C to form a pre-cured tread rubber composite (2) comprising a cured tread rubber layer and the polymeric film (5) molded thereon.

7. The process of claim 6 wherein the protective removable polymeric film (5) has a melting point (ASTM D789) greater than 190°C and/or wherein the protective removable polymeric film (5) is not melted onto the surface of the tread rubber during the shaping and curing thereof.

8. The process of claim 6 or 7 wherein the polymeric film (5) comprises a nylon 6 film having a melting point in a range of from 200°C to 220°C, a nylon 6,6 film having a melting point in a range of from 250°C to 260°C or a thermoplastic fluorinated polyethylene film.

9. The process of at least one of the claims 6 to 8 wherein the cured tread rubber layer is of a cap/base construction comprising an outer tread cap rubber layer (3) and an underlying tread base rubber layer (4) and wherein the polymeric film (5) is applied to the surface of the tread base rubber layer (4) prior to the curing thereof; or wherein the cured tread rubber layer is a tread cap rubber layer (3) without an underlying tread base rubber layer (4).

10. The process of at least one of the previous claims 6 to 9 which further comprises removing the polymeric film (5) from the surface of the cured tread rubber layer to yield a pre-cured tread rubber layer having a unbuffed rubber surface that is clean, and/or free from a mold release agent coating and preferably also free or at least largely free from surface contamination and atmospheric degradation or oxidation.

11. A pre-cured rubber tread having a unbuffed surface being clean and/or free of a mold release agent coating prepared by the process of claim 9.

12. A pre-cured rubber tread composite comprising a cured tread rubber layer containing a protective removable polymeric film (5) on a surface thereof prepared by the process of one of the claims 6 to 9.

13. A process of preparing a retreaded tire, the process comprising:
(A) applying an unbuffed rubber surface of a pre-cured rubber tread (2) prepared by the process of claim 10 to a circumferential uncured rubber layer (10) without an adhesive coating therebetween, wherein said circumferential uncured rubber layer (10) overlays a cured rubber tire carcass (8) to form an assembly thereof, and
(B) curing said assembly an elevated temperature to form a cured retreaded tire.

14. The process of claim 13 wherein the circumferential uncured rubber layer (10) is an adhesive or tacky circumferential rubber cushion layer.

15. The process of claim 13 or 14 wherein said uncured rubber layer (10) is of a rubber composition comprising at least one conjugated diene based elastomer which contains a bis-imide compound comprising of N,N'm-xylene biscitraconic imide, N,N'-m-phenylene bismaleimide, 1,1'(methylenedi-4,1-phenylene) bis maleimide, or combinations thereof, and a phenol-formaldehyde tackifier resin.
